# EUROPEAN PATENT APPLICATION

(11) **EP 3 955 216 A2**
(43) Date of publication of application: **16.02.2022**
(21) Application number: 21203410.2
(22) Date of filing: 19.10.2021
(51) Int. Cl.: G06V 20/10, G06V 20/70

(54) **METHOD AND APPARATUS FOR RECOGNIZING IMAGE, ELECTRONIC DEVICE AND STORAGE MEDIUM**

(30) Priority: 25.03.2021 CN 202110320420
(71) Applicant: Beijing Baidu Netcom Science and Technology Co., Ltd., Beijing 100085 (CN)
(72) Inventor: PENG, Yan, Beijing, 100085 (CN); LONG, Xiang, Beijing, 100085 (CN); ZHENG, Honghui, Beijing, 100085 (CN); JIA, Zhuang, Beijing, 100085 (CN); ZHANG, Bin, Beijing, 100085 (CN); WANG, Xiaodi, Beijing, 100085 (CN); XIN, Ying, Beijing, 100085 (CN); GU, Yi, Beijing, 100085 (CN); WANG, Yunhao, Beijing, 100085 (CN); LI, Chao, Beijing, 100085 (CN); FENG, Yuan, Beijing, 100085 (CN); HAN, Shumin, Beijing, 100085 (CN)
(74) Representative: advotec.

(57) **Abstract**

The disclosure provides a method for recognizing an image, an apparatus for recognizing an image, an electronic device and a storage medium, belonging to a field of artificial intelligence technologies, a field of computer vision and technologies and a field of deep learning technologies. The method includes: obtaining (101) an image to be processed, in which the number of first channels of the image is greater than the number of second channels of a red-green-blue (RGB) image; for each pixel of the image, determining (102) a semantic type of the pixel based on a value of the pixel on each channel; and generating (103) a recognition result of the image based on the image and the semantic type of each pixel.

## Description

### TECHNICAL FIELD

The disclosure relates to the field of artificial intelligence technology, and more particularly to the technical fields of computer vision and deep learning. The disclosure may be applied to remote sensing imaging scenarios, especially relate to a method for recognizing an image, an apparatus for recognizing an image, an electronic device, and a storage medium.

### BACKGROUND

With development of artificial intelligence (AI) technologies, image recognition has been greatly developed. Image recognition aims to perform pixel-level content analysis of images, and extract and classify categories of interest in the images, which has high practical value in urban and rural planning, flood prevention and disaster relief, and other fields.

Currently, data for image recognition in the related art is red-green-blue (RGB) channel data processed by geographic information software. For some multi-spectral images, the RGB channel data is discarded during processing, which causes low image recognition accuracy.

### SUMMARY

The embodiments of the disclosure provide a method for recognizing an image, an apparatus for recognizing an image, an electronic device and a storage medium.

Embodiments of the disclosure in a first aspect provide a method for recognizing an image. The method includes: obtaining an image to be processed, in which the number of first channels of the image is greater than the number of second channels of a red-green-blue (RGB) image; for each pixel of the image, determining a semantic type of the pixel based on a value of the pixel on each channel; and generating a recognition result of the image based on the image and the semantic type of each pixel.

Embodiments of the disclosure in a second aspect provide an apparatus for recognizing an image. The apparatus includes: an obtaining module, a determining module and a generating module. The obtaining module is configured to obtain an image to be processed, in which the number of first channels of the image is greater than the number of second channels of an RGB (red green blue) image. The determining module is configured to, for each pixel of the image, determine a semantic type of the pixel based on a value of the pixel on each channel. The generating module is configured to generate a recognition result of the image based on the image and the semantic type of each pixel.

Embodiments of the disclosure in a third aspect provide an electronic device. The electronic device includes: at least one processor and a memory communicatively coupled to the at least one processor. The memory stores instructions executable by the at least one processor. When the instructions are implemented by the at least one processor, the at least one processor is caused to implement the method according to the first aspect of the disclosure.

Embodiments of the disclosure in a fourth aspect provide a non-transitory computer-readable storage medium storing computer instructions. The computer instructions are used to make the computer implement the method according to the first aspect of the disclosure.

Embodiments of the disclosure in a fifth aspect provide a computer program product including computer programs, and when the computer program is executed by a processor, the method according to the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a schematic diagram of the first embodiment of the disclosure.
FIG. 2 is a schematic diagram of the second embodiment of the disclosure.
FIG. 3 is a schematic diagram of the third embodiment of the disclosure.
FIG. 4 is a schematic diagram of the fourth embodiment of the disclosure.
FIG. 5 is a block diagram of an electronic device configured to implement the method for recognizing an image according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

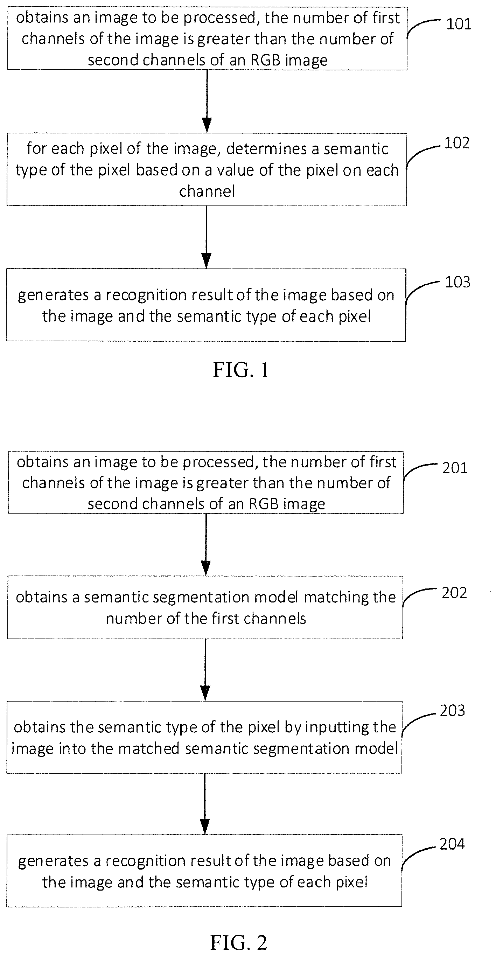

FIG. 1 is a schematic diagram of the first embodiment of the disclosure. It should be noted that the method for recognizing an image of the embodiments of the disclosure is applied to the apparatus for recognizing an image of the embodiments of the disclosure, and the apparatus may be configured in an electronic device. The electronic device may be a mobile terminal, for example, a mobile phone, a tablet computer, a personal digital assistant, and other hardware devices with various operating systems.

As illustrated in FIG. 1, the method for recognizing an image includes the following.

In block 101, an image to be processed is obtained, the number of first channels of the image is greater than the number of second channels of a red-green-blue (RGB) image.

In embodiments of the disclosure, the image to be processed is acquired through technologies such as aerial scanning and microwave radar.

In addition, the image includes RGB channels and at least one additional channel. The number of channels of the image to be processed is determined as the number of first channels, and the number of channels of the RGB image is determined as the number of second channels. It is noted that the number of first channels of the image to be processed is greater than the number of second channels of the RGB image. For example, the number of second channels of the RGB image is 3, while the number of first channels of the image to be processed may be dozens.

In block 102, for each pixel of the image, a semantic type of the pixel is determined based on a value of the pixel on each channel.

In some embodiments, a semantic segmentation model matching the number of first channels is obtained and the image is input into the matching semantic segmentation model to obtain the semantic types of pixels of the image. It is to be noted that the semantic type may include, but is not limited to, forest, river, building and mountain.

As an example, if the image has four channels, the pixel values (a1, b1, c1, d1) on the four channels correspond to the forest, the pixel values (a2, b2, c2, d2) correspond to the river, the pixel values (a3, b3, c3, d3) correspond to the building, and the pixel values (a4, b4, c4, d4) correspond to the mountain.

That is, in order to accurately obtain the semantic type of the pixel in the image and improve the image recognition accuracy, in some embodiments of the disclosure, after the image to be processed is obtained, the semantic segmentation model that matches the number of first channels of the image is obtained. The image is input into the model to obtain the semantic type of each pixel in the image. The details can refer to following descriptions of the disclosure.

In block 103, a recognition result of the image is generated based on the image and the semantic type of each pixel.

In order to intuitively display the recognition result of the image, after the semantic type of each pixel in the image is obtained, the RGB image corresponding to the image is generated, and the recognition result of the image is generated based on the RGB image corresponding to the image and the semantic type of each pixel. The details can refer to the following descriptions of the disclosure.

In conclusion, by making full use of the value of the pixel on each channel, the semantic type of each pixel of the image is determined. The image is recognized based on the semantic type of each pixel in the image, which improves the image recognition accuracy.

In order to accurately obtain the semantic type of each pixel in the image and further improve the image recognition accuracy, as illustrated in FIG. 2, FIG. 2 is a schematic diagram of the second embodiment of the disclosure. As an example, after acquiring the image to be processed, the semantic segmentation model that matches the number of first channels of the image is determined. The image is input into the model to acquire the semantic type of each pixel in the image. The image is recognized based on the semantic type of each pixel. The above is described in detail as follows.

In block 201, an image to be processed is obtained. The number of first channels of the image is greater than the number of second channels of a red-green-blue (RGB) image.

In block 202, a semantic segmentation model matching the number of the first channels is obtained.

As an example, for each of at least one trained candidate semantic segmentation model, a difference between the number of input channels of the trained candidate semantic segmentation model and the number of first channels is determined. A first candidate semantic segmentation model corresponding to a minimum difference is obtained. An input channel adjustment is performed on the first candidate semantic segmentation model based on the number of first channels to obtain the matched semantic segmentation model.

That is, the difference between each trained candidate semantic segmentation model and the number of first channels of the image is calculated. The candidate semantic segmentation model corresponding to the minimum difference is used as the first candidate semantic segmentation model. If the number of first channels of the image is greater than the number of input channels of the first candidate semantic segmentation model, the number of input channels of the first candidate semantic segmentation model is increased. If the number of first channels of the image is equal to the number of input channels of the first candidate semantic segmentation model, the number of input channels of the first candidate semantic segmentation model does not need to be adjusted. If the number of first channels of the image is smaller than the number of input channels of the first candidate semantic segmentation model, the number of input channels of the first candidate semantic segmentation model is reduced. Therefore, the semantic segmentation model matching the number of first channels of the image can be obtained accurately.

It is understandable that, in order to obtain the at least one trained candidate semantic segmentation model, before determining the difference between the number of input channels of each trained candidate semantic segmentation model and the number of first channels, initial candidate semantic segmentation models can be trained to obtain the trained candidate semantic segmentation models.

As an example, at least one initial candidate semantic segmentation model is obtained. Training data is obtained for each initial candidate semantic segmentation model. The training data includes sample images and sample semantic types of pixels of the sample images. The trained candidate semantic segmentation model is obtained by training the initial candidate semantic segmentation model based on the sample images and the semantic types.

That is, in some embodiments of the disclosure, one or more untrained neural network models may be used as the initial candidate semantic segmentation model(s). For each initial candidate semantic segmentation model, the number of corresponding input channels is obtained. The number of channels of each image sample is compared with the number of input channels of the initial candidate semantic segmentation model respectively. The image samples with the same number of channels as the number of input channels of the initial candidate semantic segmentation model are used as the training data of the initial candidate semantic segmentation model. According to the sample semantic type of each pixel in the training data, the initial semantic segmentation model is trained to obtain a trained semantic segmentation model, thereby improving the accuracy of the trained semantic segmentation model.

In block 203, the semantic type of each pixel is obtained by inputting the image into the matched semantic segmentation model.

After obtaining the semantic segmentation model matching the number of first channels of the image, the image is input into the matched semantic segmentation model, and the semantic segmentation model outputs the semantic type of each pixel in the image. In this way, the semantic type of each pixel in the image can be obtained.

In block 204, a recognition result of the image is generated based on the image and the semantic type of each pixel.

It is to be noted that detailed description of blocks 201 and 204 can refer to the descriptions of blocks 101 and 103 in FIG. 1, which are not repeated herein.

In conclusion, by acquiring the semantic segmentation model that matches the number of first channels of the image, the image is input into the model, and the semantic type of each pixel in the image is acquired. Thus, the semantic type of each pixel in the image is accurately obtained, and the image recognition accuracy is further improved.

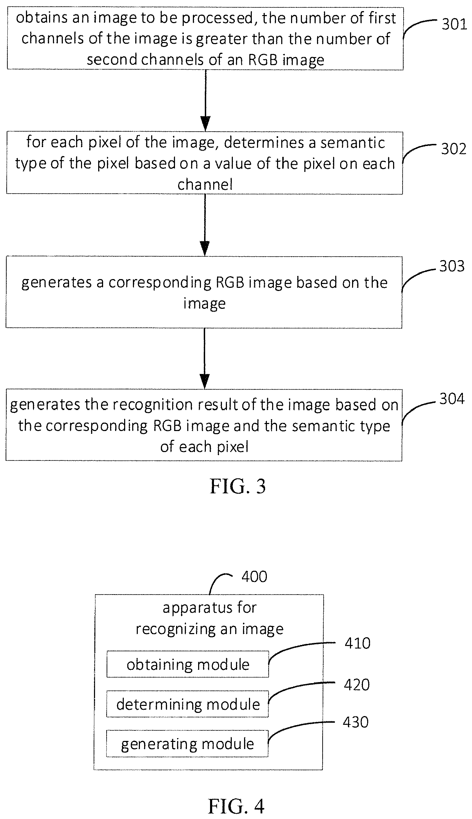

In order to intuitively display the recognition result of the image, as illustrated in FIG. 3,

FIG. 3 is a schematic diagram of the third embodiment of the disclosure. In some embodiments of the disclosure, the RGB image corresponding to the image is generated. The recognition result of the image is generated based on the RGB image corresponding to the image and the semantic type of each pixel. FIG. 3 may include the following.

In block 301, an image to be processed is obtained. The number of first channels of the image is greater than the number of second channels of a red-green-blue (RGB) image.

In block 302, for each pixel of the image, a semantic type of the pixel is determined based on a value of the pixel on each channel.

It is to be noted that, detailed descriptions of the block 301 can refer to the descriptions of the block 101 of FIG. 1, and detailed description of the block 302 can refer to the descriptions of blocks 202 to 203 in FIG. 2, which are not repeated herein.

In block 303, an RGB image corresponding to the image is generated.

For example, channels other than the RGB channels in the image are removed. For each of the RGB channels, the values of pixels in the channel are normalized, and a processed value is obtained by multiplying the normalized value by a value threshold of the RGB channels.

That is, in order to make the recognition result of the image to be a displayable image, channels other than the RGB channels are removed, and the pixel values on each of the RGB channels are normalized. For example, a maximum value threshold can be determined. The maximum value threshold may be one of a maximum value of values of pixels of the image on a corresponding channel or on the RGB channels, a maximum value of values of pixels of each image stored in a preset image collection on a corresponding channel or on the RGB channels; or a maximum value of value of pixels of a part of images stored in a preset image collection on a corresponding channel or on the RGB channels. The value of pixel is normalized on each of the RGB channels based on the maximum value threshold. A processed value of each pixel is obtained by multiplying the normalized value by the value threshold of the RGB channels.

For example, the channels other than the RGB channels in the image are removed by geographic information processing software. A statistic is made on the values of the pixels on all channels of the processed image to obtain a maximum value, which is represented as MAX_VAL. Taking the value p_c_i_j of a pixel having the coordinates (i, j) on a certain channel of the RGB channels in the image as an example, the normalized value of the pixel is obtained by dividing the value p_c_ij by the maximum value MAX_VAL. The value threshold (such as 255) of the RGB channels is multiplied by the normalized value to obtain the multiplied result as the processed value. For example, the processed value of the pixel may be expressed as p_c_i_j/MAX_VAL*255.

In block 304, a recognition result of the image is generated based on the corresponding RGB image and the semantic type of each pixel.

For example, the RGB image corresponding to the image is annotated based on the semantic type of each pixel, and the annotated result is used as the recognition result of the image. For example, the semantic type, such as forest, river, or building, can be labeled on the RGB image, and the annotation result of the RGB image is used as the recognition result of the image.

In conclusion, the RGB image corresponding to the image is generated. The recognition result of the image is generated based on the RGB image corresponding to the image and the semantic type of each pixel. Therefore, the recognition result of the image can be intuitively displayed.

With the method for recognizing an image according to embodiments of the disclosure, the image to be processed is obtained. The number of first channels of the image is greater than the number of second channels of the RGB image. The semantic type of each pixel in the image is determined based on the value of each pixel in the image on each channel. According to the image and the semantic type of each pixel, the recognition result of the image is generated. This method determines the semantic type of each pixel in the image by making full use of the values of the pixels on the channels in the image, and the image is recognized based on the semantic type of each pixel in the image, thereby improving the image recognition accuracy.

In order to implement the foregoing embodiment, the embodiments of the disclosure also provide an apparatus for recognizing an image.

FIG. 4 is a schematic diagram of a fourth embodiment of the disclosure. As illustrated in FIG. 4, the apparatus 400 for recognizing an image includes: an obtaining module 410, a determining module 420, and a generating module 430.

The obtaining module 410 is configured to obtain an image to be processed, the number of first channels of the image is greater than the number of second channels of an RGB (red green blue) image. The determining module 420 is configured to, for each pixel of the image, determine a semantic type of the pixel based on a value of the pixel on each channel. The generating module 430 is configured to generate a recognition result of the image based on the image and the semantic type of each pixel.

In a possible implementation, the determining module 420 is configured to: obtain a target semantic segmentation model matching the number of the first channels; and obtain the semantic type of the pixel by inputting the image into the target semantic segmentation model.

In a possible implementation, the determining module 420 is further configured to: for each of at least one trained candidate semantic segmentation model, determine a difference between the number of inputting channels of the trained candidate semantic segmentation model and the number of the first channels; obtain a first candidate semantic segmentation model corresponding to a minimum difference; and obtain the target semantic segmentation model by adjusting the inputting channels of the first candidate semantic segmentation model based on the number of the first channels.

In a possible implementation, the apparatus 400 further includes a training module.

The training module is configured to: obtain an initial candidate semantic segmentation model; obtain training data for the initial candidate semantic segmentation model, in which the training data includes sample images and sample semantic types of pixels of the sample images; and obtain the trained candidate semantic segmentation model by training the initial candidate semantic segmentation model based on the sample images and the semantic types.

In a possible implementation, the generating module 430 is further configured to: generate a corresponding RGB image based on the image; and generate the recognition result of the image based on the corresponding RGB image and the semantic type of each pixel.

In a possible implementation, the generating module 430 is further configured to: for each pixel of the image, remove values of the pixel on channels other than RGB channels from the image, obtain a normalized value by normalizing the value of the pixel on each of the RGB channels, and obtain a processed value by multiplying the normalized value by a value threshold of the RGB channels; and generate the corresponding RGB image based on the processed value of each pixel on the RGB channels.

In a possible implementation, the apparatus 400 further includes a processing module.

The processing module is configured to determine a maximum value threshold by one of: obtaining a maximum value from values of pixels of the image on a corresponding channel or on the RGB channels, obtaining a maximum value from values of pixels of each image stored in a preset image collection on a corresponding channel or on the RGB channels; or obtaining a maximum value from value of pixels of a part of images stored in a preset image collection on a corresponding channel or on the RGB channels; and normalize the value of pixel on each of the RGB channels based on the maximum value threshold.

With the apparatus for recognizing an image according to the embodiments of the disclosure, an image to be processed is obtained, the number of first channels of the image is greater than the number of second channels of an RGB (red green blue) image. For each pixel of the image, a semantic type of the pixel is determined based on a value of the pixel on each channel. A recognition result of the image is generated based on the image and the semantic type of each pixel. The apparatus determines the semantic type of each pixel in the image by making full use of the value of the pixel in all channels in the image, and then recognizes the image according to the semantic type of each pixel in the image, so that the accuracy of image recognition is improved.

According to the embodiments of the disclosure, the disclosure also provides an electronic device, a readable storage medium and a computer program product.

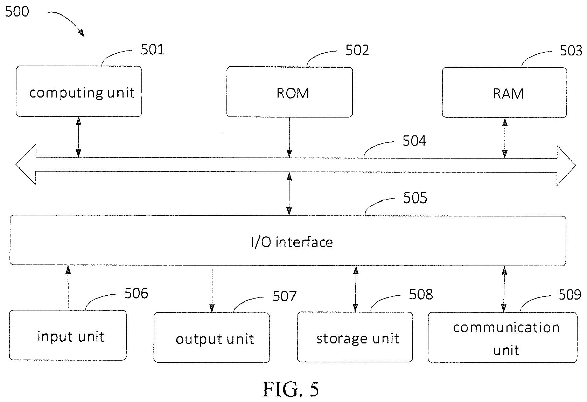

FIG. 5 is a block diagram of an electronic device 500 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the device 500 includes a computing unit 501 performing various appropriate actions and processes based on computer programs stored in a read-only memory (ROM) 502 or computer programs loaded from the storage unit 508 to a random access memory (RAM) 503. In the RAM 503, various programs and data required for the operation of the device 500 are stored. The computing unit 501, the ROM 502, and the RAM 503 are connected to each other through a bus 504. An input/output (I/O) interface 505 is also connected to the bus 504.

Components in the device 500 are connected to the I/O interface 505, including: an inputting unit 506, such as a keyboard, a mouse; an outputting unit 507, such as various types of displays, speakers; a storage unit 508, such as a disk, an optical disk; and a communication unit 509, such as network cards, modems, wireless communication transceivers, and the like. The communication unit 509 allows the device 500 to exchange information/data with other devices through a computer network such as the Internet and/or various telecommunication networks.

The computing unit 501 may be various general-purpose and/or dedicated processing components with processing and computing capabilities. Some examples of computing unit 501 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 501 executes the various methods and processes described above. For example, in some embodiments, the method may be implemented as a computer software program, which is tangibly contained in a machine-readable medium, such as the storage unit 508. In some embodiments, part or all of the computer program may be loaded and/or installed on the device 500 via the ROM 502 and/or the communication unit 509. When the computer program is loaded on the RAM 503 and executed by the computing unit 501, one or more steps of the method described above may be executed. Alternatively, in other embodiments, the computing unit 501 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may also be a distributed system server, or a server combined with a block-chain.

It should be noted that AI is a discipline that studies the computer to simulate certain human thinking processes and intelligent behaviors (such as learning, reasoning, thinking and planning), which has both hardware-level technologies and software-level technologies. AI hardware technologies generally include technologies such as sensors, dedicated AI chips, cloud computing, distributed storage, and big data processing. AI software technologies mainly include several major directions such as computer vision technology, speech recognition technology, natural language processing technology, and machine learning/depth learning, big data processing technology, and knowledge graph technology.

In addition, the acquisition, storage, and application of the information involved in the technical solution of the disclosure are in compliance with relevant laws and regulations, and do not violate public order and good customs.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for recognizing an image, comprising:
obtaining (101; 201; 301) an image to be processed, wherein the number of first channels of the image is greater than the number of second channels of a red-green-blue (RGB) image;
for each pixel of the image, determining (102; 302) a semantic type of the pixel based on a value of the pixel on each channel; and
generating (103; 204) a recognition result of the image based on the image and the semantic type of each pixel.

2. The method of claim 1, wherein determining (102; 302) the semantic type of the pixel based on the value of the pixel on each channel comprises:
obtaining (202) a semantic segmentation model matching the number of the first channels; and
obtaining (203) the semantic type of the pixel by inputting the image into the matched semantic segmentation model.

3. The method of claim 2, wherein obtaining (202) the semantic segmentation model matching the number of the first channels comprises:
for each of at least one trained candidate semantic segmentation model, determining a difference between the number of inputting channels of the trained candidate semantic segmentation model and the number of the first channels;
obtaining a first candidate semantic segmentation model corresponding to a minimum difference; and
obtaining the matched semantic segmentation model by adjusting the inputting channels of the first candidate semantic segmentation model based on the number of the first channels.

4. The method of claim 3, further comprising:
obtaining an initial candidate semantic segmentation model;
obtaining training data for the initial candidate semantic segmentation model, wherein the training data comprises sample images and sample semantic types of pixels of the sample images; and
obtaining the trained candidate semantic segmentation model by training the initial candidate semantic segmentation model based on the sample images and the semantic types.

5. The method of any one of claims 1 to 4, wherein generating (103; 204) the recognition result of the image based on the image and the semantic type of each pixel comprises:
generating (303) a corresponding RGB image based on the image; and
generating (304) the recognition result of the image based on the corresponding RGB image and the semantic type of each pixel.

6. The method of claim 5, wherein generating (303) the corresponding RGB image based on the image comprises:
for each pixel of the image, removing values of the pixel on channels other than RGB channels from the image, obtaining a normalized value by normalizing the value of the pixel on each of the RGB channels, and obtaining a processed value by multiplying the normalized value by a value threshold of the RGB channels; and
generating the corresponding RGB image based on the processed value of each pixel on the RGB channels.

7. The method of claim 6, wherein normalizing the value of the pixel on each of the RGB channels comprises:
determining a maximum value threshold by one of:
obtaining a maximum value from values of pixels of the image on a corresponding channel or on the RGB channels, obtaining a maximum value from values of pixels of each image stored in a preset image collection on a corresponding channel or on the RGB channels;
or obtaining a maximum value from value of pixels of a part of images stored in a preset image collection on a corresponding channel or on the RGB channels; and
normalizing the value of pixel on each of the RGB channels based on the maximum value threshold.

8. An apparatus (400) for recognizing an image, comprising:
an obtaining module (410), configured to obtain an image to be processed, wherein the number of first channels of the image is greater than the number of second channels of an RGB (red green blue) image;
a determining module (420), configured to, for each pixel of the image, determine a semantic type of the pixel based on a value of the pixel on each channel; and
a generating module (430), configured to generate a recognition result of the image based on the image and the semantic type of each pixel.

9. The apparatus (400) of claim 8, wherein the determining module (420) is further configured to:
obtain a target semantic segmentation model matching the number of the first channels; and
obtain the semantic type of the pixel by inputting the image into the target semantic segmentation model.

10. The apparatus (400) of claim 9, wherein the determining module (420) is further configured to:
for each of at least one trained candidate semantic segmentation model, determine a difference between the number of inputting channels of the trained candidate semantic segmentation model and the number of the first channels;
obtain a first candidate semantic segmentation model corresponding to a minimum difference; and
obtain the target semantic segmentation model by adjusting the inputting channels of the first candidate semantic segmentation model based on the number of the first channels.

11. The apparatus (400) of claim 10, further comprising a training module, wherein the training module is configured to:
obtain an initial candidate semantic segmentation model;
obtain training data for the initial candidate semantic segmentation model, wherein the training data comprises sample images and sample semantic types of pixels of the sample images, each pixel corresponds to a respective sample semantic type; and
obtain the trained candidate semantic segmentation model by training the initial candidate semantic segmentation model based on the sample images and the semantic types.

12. The apparatus of any one of claims 8 to 11, wherein the generating module (430) is further configured to:
generate a corresponding RGB image based on the image; and
generate the recognition result of the image based on the corresponding RGB image and the semantic type of each pixel.

13. An electronic device, comprising:
at least one processor; and
a memory communicatively connected with the at least one processor; wherein,
the memory stores instructions executable by the at least one processor, and when the instructions are executed by the at least one processor, the at least one processor implements the method according to any one of claims 1-7.

14. A non-transitory computer-readable storage medium storing computer instructions, wherein the computer instructions are configured to make the computer to implement the method according to any one of claims 1-7.

15. A computer program product, comprising a computer program that, when executed by a processor, the method according to any one of claims 1-7 is implemented.
